# EUROPÄISCHE PATENTSCHRIFT

(11) **EP 3 390 748 B1**
(45) Veröffentlichungstag und Bekanntmachung des Hinweises auf die Patenterteilung: **17.03.2021**
(21) Anmeldenummer: 16813219.9
(22) Anmeldetag: 28.11.2016
(51) Int. Cl.: E05B 47/06, E05B 79/20, E05B 83/24

(54) **SCHLOSS FÜR EIN KRAFTFAHRZEUG**
LOCK FOR A MOTOR VEHICLE
VERROU DE VÉHICULE AUTOMOBILE

(30) Priorität: 15.12.2015 DE 102015121848
(43) Veröffentlichungstag der Anmeldung: 24.10.2018
(73) Patentinhaber: Kiekert AG, 42579 Heiligenhaus (DE)
(72) Erfinder: STURM, Christian, 47804 Krefeld (DE); DROST, Bernhard, 46419 Isselburg (DE); ÖZDOGAN, Murat, 42109 Wuppertal (DE)
(86) Internationale Anmeldenummer: PCT/DE2016/100553
(87) Internationale Veröffentlichungsnummer: WO 2017/101900

(56) Entgegenhaltungen:
- EP-A1- 1 411 191
- WO-A1-99/27218
- DE-A1- 2 116 448
- DE-A1-102007 003 292
- FR-A1- 2 810 754

## Beschreibung

Die Erfindung betrifft eine Betätigungseinrichtung mit mindestens einem Schloss, insbesondere einem Schloss für eine Frontklappe eines Kraftfahrzeugs, umfassend eine Drehfalle, wobei die Drehfalle mittels eines Schlosshalters in eine Schließlage verbringbar ist, einem mit dem Schloss verbundenen Betätigungselement, wobei nach einem ersten Betätigen des Betätigungselementes die Frontklappe von einer Schließlage in eine Stützlage verbringbar ist und wobei nach mindestens einer weiteren Betätigung des Betätigungselements die Frontklappe in eine Freigabelage verbringbar ist und einem Betätigungsübertragungsmittel, insbesondere einem Bowdenzug, zwischen dem Betätigungselement und dem Schloss.

Betätigungseinrichtungen in Kraftfahrzeugen unterliegen insbesondere dann hohen Sicherheitsanforderungen, wenn durch deren Betätigung eine Gefährdung für den Kraftfahrzeugführer und/oder weitere Verkehrsteilnehmer ausgehen kann. Eine derartige Betätigungseinrichtung, die einem Sicherheitsstandard unterliegt, ist eine Betätigungseinrichtung für ein Schloss bzw. Schließsystem für eine Klappe, Haube, Tür und/oder Schiebetür. Kommt es beispielsweise während der Fahrt mit dem Kraftfahrzeug zu einem unbeabsichtigten Betätigen des Betätigungselementes zum Öffnen zum Beispiel einer Motorhaube, so kann sich die Motorhaube durch den Fahrtwind öffnen und dem Fahrer beispielsweise die Sicht nehmen. In solchen Fällen würde es zwangsläufig zu einer Beschädigung am Kraftfahrzeug und/oder zu weiteren Schäden auch mit weiteren Verkehrsteilnehmern kommen können. Um derartige Unfälle und/oder Beschädigungen zu verhindern, gibt es Sicherheitsstandards, die die Betätigungseinrichtungen erfüllen müssen. Beispielhaft kann hierbei auf die ISO 26262 verwiesen werden, die eine ISO-Norm für sicherheitsrelevante elektrische/elektronische Systeme in Kraftfahrzeugen definiert und aus der der Automotive Safety Integrity Level (ASIL) bekannt ist oder der Federal Motor Vehicle Safety Standard 113 (FMVSS 113) der United Nations genannt werden. Ein derartiger Standard definiert die sicherheitsrelevanten Funktionen der Betätigungseinrichtungen im Kraftfahrzeug und insbesondere auch einer Betätigungseinrichtung eines Schlosses für eine Frontklappe eines Kraftfahrzeugs.

Eine Betätigungseinrichtung für ein Schloss einer Frontklappe eines Kraftfahrzeugs ist aus der DE 198 04 066 A1 bekannt geworden. Die Betätigungseinrichtung weist ein Schloss zur Verriegelung einer Frontklappe eines Kraftfahrzeugs und ein Fangelement auf, mit dem eine sich in einer Schließlage befindliche Frontklappe in eine Stützlage und letztlich in eine Freigabelage verbringbar ist. Dabei kann das Schloss vom Inneren des Kraftfahrzeugs aus über einen Hebel und einen mit diesem Hebel gekoppelten Bowdenzug geöffnet werden, wobei eine die Drehfalle des Schlosses verriegelnde Sperrklinke von der Drehfalle weg verstellt wird.

Die in der DE 198 04 066 A1 offenbarte Frontklappe dürfte durch wenigstens eine vorgespannte Federungseinrichtung in die Stützlage gelangen, in der ein Fangelement ein weiteres Öffnen der Frontklappe über die Stützlage hinaus verhindert. An dem Fangelement befindet sich eine Handhabe, die ein manuelles Verschwenken des Fangelements in eine Freigabelage ermöglicht, in der die Frontklappe vollständig zu öffnen ist. Hierzu dürfte die Handhabe wie üblich durch einen zwischen dem vorderen Rand der in der Stützlage befindlichen Frontklappe und der Karosserie bzw. dem Kühler des Kraftfahrzeugs gebildeten Spalt hindurch manuell zu betätigen sein. Dabei kann die Bedienhand an ein mit Schmutzpartikeln bedecktes Teil des Kraftfahrzeugs gelangen und verschmutzen. Dabei kann die Handhabe auch durch Verwirbelungen in einem vorderen Motorraum von der Fahrbahn aufgewirbelte Schmutzpartikel verschmutzt sein, so dass sich auch bei einer vorsichtigen Betätigung der Handhabe eine Verschmutzung der Bedienhand nicht vermeiden lässt.

Das vorstehend beschriebene Öffnen der Frontklappe des Kraftfahrzeugs beschreibt ein Verfahren, bei dem die Frontklappe mittels zweier separater Betätigungen öffenbar ist, wobei die voneinander entkoppelten Verfahrensschritte ein Sicherungssystem darstellen, das gewährleistet, dass die Frontklappen auch bei einem unbeabsichtigten Betätigen eines Betätigungselements zum Öffnen der Frontklappe keine Gefährdung für den Kraftfahrzeugführer oder den Verkehr darstellt.

DE 10 2007 003 292 A1 bildet die Basis für die Oberbegriffe der unabhängigen Ansprüche und beschreibt eine Verriegelungseinrichtung mit einem Schloss und einem verstellbaren Fangelement für eine Frontklappe eines Kraftfahrzeugs. Dabei ist ein im Inneren des Kraftfahrzeugs angeordneter Schwenkhebel als Betätigungselement mit einem Bowdenzug verbunden, der mit dem Schloss in Verbindung steht. Das Schloss umfasst eine Drehfalle, die mittels eines Schlosshalters in eine Schließlage verbringbar ist. Zum Öffnen des Schlosses und somit zu einem Bewegen bzw. Verbringen der Frontklappe von der Schließlage in eine Stützlage muss ein Bediener den Hebel bzw. das Betätigungselement betätigen und somit das Schloss entsperren. Die Frontklappe gelangt folglich von der Schließlage in die Stützlage, in der die Frontklappe mittels eines Fanghakens in einer Position gehalten ist, in der sich die Frontklappe nicht selbständig öffnen lässt. Erst nach einem nochmaligen Betätigen des Betätigungselements wird auch der Fanghaken bewegt, wodurch die Frontklappe in eine Freigabelage gelangt.

FR 2 810 754 A1 beschreibt eine Sicherheitsvorrichtung, die es ermöglicht, die Wirkung einer Steuerung, die durch lineare mechanische Traktion wirkt, aufzuheben. Diese Sicherheitsvorrichtung umfasst zwei Elemente 1, 2, die normalerweise gekoppelt und jeweils mit einem Teil der Traktionsmittel verbunden sind, und ein Gehäuse 15, das zwei verschiedene Fächer 8, 16 hat, die durch eine nicht magnetisierbare Trennwand 11 getrennt sind. Die beiden Elemente 1, 2 sind in dem Fach 8 angeordnet. Das andere Fach enthält Elemente für das Erfassen und Steuern einer Zustandsänderung, nämlich einen Elektromagneten 12, eine Diodenbrücke 14 und einen Verschiebungsdetektor 10. Der Verschiebungsdetektor 10 erfasst die Verschiebung des zweiten Elements 2, um das Einschalten des Elektromagneten 12 durchzuführen. Das erste Element 1 weist einen Magneten 4 auf. Wenn der Elektromagnet 12 eingeschaltet ist, dann stößt er den Magneten 4 ab, sodass die Elemente 1, 2 gekoppelt sind.

DE 21 16 448 A beschreibt eine Diebstahlsicherung für Kraftfahrzeuge, durch die das Anlassen des Motors verhindert wird. Ein mit einem Zündschloss 1 verbundener Zündschalter 3 ist vom Fahrgastraum unzugänglich angeordnet. In der Sperrstellung des Zündschlosses 1 ist das Motorhaubenschloss 7, 8 derartig verriegelt, dass ein Öffnen nicht möglich ist. Das Zündschloss 1 ist in bekannter Weise im Armaturenbrett 2 befestigt. Die Verbindung zwischen Zündschloss 1 und Zündschalter 3 ist so lang gestaltet, dass der Zündschalter 3 im Motorraum 4 liegt. Der Zündschalter 3 ist mit einem Elektromagnet 15 derart gekoppelt, dass in der Nullstellung des Zündschalters 3 eine Verriegelung des Motorhaubenschlosses 7, 8 erfolgt. Die Öffnung des Motorhaubenschlosses 7, 8 erfolgt über einen Bowdenzug 11, welcher vom Fahrgastraum mittels eines Zugknopfes 12 betätigt werden kann. Mit dem Zündschalter 3 ist ein Elektromagnet 15 gekoppelt, der so angeordnet ist, dass sein Anker 13 in ein mit dem Bowdenzug 11 verbundenes Sperrteil 16 greift. Der Eingriff erfolgt automatisch durch Drehen des Zündschlosses 1 und damit auch des Zündschalters 3 in die Sperr- oder Nullstellung. Nach dem Eingreifen des Ankers 13 in das Sperrteil 16 ist die Betätigung des Bowdenzuges 11 und damit ein Öffnen des Motorhaubenschlosses 7, 8 unmöglich.

WO 1999 027 218 A1 beschreibt ein elektromechanisches Schloss zum selektiven Verhindern der Bewegung eines Kabels 12. Das Schloss weist ein elektromagnetisches Stellglied 10 auf, das im betätigten Zustand die Betätigung des Kabels 12 verhindert. Dem Stellglied 10 ist ein Sensor 14 elektrisch zugeordnet. Der Sensor 14 ist konfiguriert, um die Stromversorgung des Stellglieds 10 selektiv zu ermöglichen, wenn das Kabel 12 gespannt wird. Wenn das Schloss durch Schließen eines primären Aktivierungsschalters 18 aktiviert wird, dann fließt solange kein Strom, wie keine Spannung auf Kabel 12 ausgeübt wird. Beim Ziehen des Kabels 12 wird der Sensor 14 ausgelöst, der wiederum das Stellglied 10 verriegelt, wodurch eine Betätigung des Kabels 12 verhindert wird.

Ein Problem, das sich bei den zuvor genannten Betätigungseinrichtungen ergibt, ist das, dass bei einem unbeabsichtigten Öffnen der Frontklappe bzw. einem unbeabsichtigten Betätigen der Betätigungseinrichtung das Schloss auch während der Fahrt öffnen lässt und zwar so weit öffnen lässt, dass die Frontklappe in eine Freigabelage gelangen kann.

Aufgabe der Erfindung ist es, eine verbesserte Betätigungseinrichtung bereitzustellen. Insbesondere ist es Aufgabe der Erfindung, eine Betätigungseinrichtung bereitzustellen, die ein unbeabsichtigtes Öffnen des Schlosses verhindert und bevorzugt während einer Bewegung des Kraftfahrzeugs verhindert. Darüber hinaus ist es Aufgabe der Erfindung, eine Betätigungseinrichtung bereitzustellen, die konstruktiv einfach und kostengünstig zu realisieren ist.

Die Lösung der Aufgabe erfolgt erfindungsgemäß durch die Gegenstände der unabhängigen Patentansprüche. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen beschriebenen Merkmale möglich.

Die Erfindung schlägt gemäß einem ersten Aspekt eine Betätigungseinrichtung vor, mit
- mindestens einem Schloss, insbesondere einem Schloss für eine Frontklappe eines Kraftfahrzeugs, umfassend eine Drehfalle, wobei die Drehfalle mittels eines Schlosshalters in eine Schließlage verbringbar ist,
- einem mit dem Schloss verbundenen Betätigungselement, wobei nach einem ersten Betätigen des Betätigungselements die Frontklappe von einer Schließlage in eine Stützlage verbringbar ist und wobei nach mindestens einem weiteren Betätien des Betätigungselement die Frontklappe in eine Freigabelage verbringbar ist,
- einem Betätigungsübertragungsmittel, insbesondere einem Bowdenzug, zwischen dem Betätigungselement und dem Schloss,
wobei
- ein Mittel zum außer Funktion setzen der Betätigungseinrichtung vorgesehen ist, so dass ein Betätigen des Schlosses mittels des Betätigungselementes unterbindbar ist;
- eine Steuerung vorgesehen ist;
- mittels der Steuerung eine Geschwindigkeit des Kraftfahrzeugs erfassbar ist;
- das Mittel zum außer Funktion setzen in Abhängigkeit von der Geschwindigkeit steuerbar ist.

Durch die erfindungsgemäße Ausbildung der Betätigungseinrichtung ist nun die Möglichkeit geschaffen, eine Betätigungseinrichtung bereitzustellen, die in der Lage ist, die Betätigungseinrichtung zum Beispiel im Falle einer Überschreitung einer definierbaren Grenzgeschwindigkeit das Schloss außer Funktion zu setzen. Dies ist insbesondere dann ein Vorteil, wenn ein Bediener das Betätigungselement unbeabsichtigt während der Fahrt betätigt und es somit zu einem Verbringen des Schlosses in eine geöffnete Lage kommen kann. Wirkt in dieser Situation das Mittel zum außer Funktion setzen auf die Betätigungseinrichtung, so bleibt ein Betätigen des Betätigungselements ohne Wirkung, wodurch das Schloss geschlossen und die Frontklappe in der Schließlage verbleibt. Es ist folglich ein Höchstmaß an Sicherheit erreichbar.

Als Betätigungseinrichtung gemäß der Erfindung wird hierbei eine Vorrichtung angesehen, mit der ein Schloss in einem Kraftfahrzeug fernbedienbar ist. Bevorzugt sind von der Betätigungseinrichtung die Schlösser umfasst, die in einem sicherheitsrelevanten Bereich zum Einsatz kommen. Zu nennen sind hierbei als Schlösser zum Beispiel Schlösser, die in Klappen, Schiebetüren, Seitentüren oder im Bereich der Motorhaube eingesetzt werden. Eben diese Schlösser, die gegen ein unbeabsichtigtes Öffnen gesichert werden müssen oder bei denen zumindest ein zweistufiger Schließ- bzw. Öffnungsvorgang zum Einsatz kommt.

Das Schloss umfasst dabei eine Drehfalle, die zumindest eine Hauptrastposition aufweist. Die Hauptrastposition der Drehfalle geht dabei mit einer Schließlage der Frontklappe einher. Das heißt, in dem Falle, in dem die Drehfalle sich in ihrer Hauptrastposition befindet, befindet sich auch die Frontklappe in der Schließlage. Die Schließlage definiert somit das Zusammenspiel zwischen dem Schloss und der Frontklappe. Unabhängig von der relativen Position zwischen Schloss und Frontklappe, die als relative Position zueinander in einer Hauptrastposition fixiert werden, kann dabei alternativ ein Antriebsmittel zum Einsatz kommen, das das sich in der Hauptrastposition befindende Schloss einschließlich der Frontklappe bewegen kann. Dabei wird die Frontklappe näher zum Kühlergrill oder zum Frontblech heranbewegt, um beispielsweise Schließspalte zu minimieren. Die Frontklappe kann einen Schlosshalter umfassen, die mit einem im Kraftfahrzeug befindlichen Schloss zusammenwirkt. Alternativ ist natürlich auch eine gegensinnige Anordnung erfindungsgemäß vorstellbar.

Zur Fernbetätigung ist im Kraftfahrzeug ein Betätigungselement, wie beispielsweise ein Schwenkhebel angeordnet. Zwischen dem Schloss und dem Betätgungselement wirkt dabei ein Betätigungsübertragungsmittel. In einer Ausführungsform kann das Betätigungsübertragungsmittel ein Bowdenzug sein. Mittels des Betätigungshebels und mit Hilfe des Betätigungsübertragungsmittels kann dann das Schloss entsperrt werden. Dabei gelangt das Schloss nach einem ersten Betätigen des Betätigungselements in eine Stützlage, in der zumindest eine weitere Betätigung des Betätigungselementes notwendig ist, um die Frontklappe in eine Freigabelage zu überführen bzw. zu verbringen. In der Freigabelage kann eine Frontklappe dann geöffnet werden.

Erfindungsgemäß weist die Betätigungseinrichtung ein Mittel zum außer Funktion setzen der Betätigungseinrichtung auf. Das Mittel zum außer Funktion setzen wirkt dabei derart auf die Betätigungseinrichtung, dass eine Betätigung unterbunden ist. Durch eine derartige Sicherheitsfunktion kann ein Höchstmaß an Sicherheit bereitgestellt werden, da ein unbeabsichtigtes Betätigen des zum Beispiel Betätigungselements nicht zum Überführen des Schlosses bzw. der Frontklappe von einer Hauptrastposition bzw. Schließlage in eine Freigabelage möglich ist.

In einer Ausführungsform der Erfindung wirkt das Mittel zum außer Funktion setzen unmittelbar auf das Betätigungsübertragungsmittel. Die Betätigungseinrichtung umfasst zumindest ein Schloss, ein Betätigungsübertragungsmittel und ein Betätigungselement. Das Betätigungselement kann beispielsweise ein Griff oder Schwenkhebel sein. Ist das Betätigungsübertragungsmittel beispielsweise ein Bowdenzug, so kann das Mittel zum außer Funktion setzen leicht entlang des Bowdenzugs positioniert werden. Dies ist insbesondere dann von Vorteil, wenn im Bereich des Schlosses und/oder des Betätigungselements keine ausreichenden Räume zur Verfügung stehen, um weitere Bauteile zu positionieren.

Vorteilhaft kann es auch sein, wenn das Mittel zum außer Funktion setzen ein Bestandteil des Betätigungselements und/oder des Schlosses ist. Ist das Mittel zum außer Funktion setzen unmittelbar zum Beispiel in das Schloss integriert, so sind keine weiteren Montageschritte für weitere Bauteile im Kraftfahrzeug notwendig. In diesem Falle würde das Schloss lediglich mit einer weiteren Funktion versehen werden, um den sicherheitsrelevanten Aspekt in das Schloss zu integrieren. Im Falle der Anordnung im Bereich des Betätigungselements ist ebenfalls ein modularer Aufbau des Betätigungselements mit einer weiteren integralen Funktion vorstellbar, um auf weitere Montageschritte verzichten zu können und somit mit einer geringstmöglichen Anzahl an Bauteilen zur Realisierung des sicherheitsrelevanten Aspekts bzw. einer Funktion zu realisieren. In beiden Fällen wäre lediglich im Bereich des Schlosses und/oder des Betätigungselements die weitere Funktion integrierbar und als modulare Einheit montierbar.

In einer Ausführungsform ist mittels des Mittels zum außer Funktion setzen das Betätigungsübertragungsmittel blockierbar. Unabhängig von der Positionierung des Mittels zum außer Funktion setzen kann das Mittel eine Blockierung des Betätigungselements, des Betätigungsübertragungsmittels und/oder des Schlosses bewirken. Eine Blockierung zum Beispiel des Betätigungselements verhindert, dass ein unbeabsichtigtes Öffnen des Gesperres erfolgt, da durch den Blockiermechanismus die Betätigungsfunktion nicht zur Verfügung steht. Dabei kann in einer Ausführungsform zum Beispiel das Betätigungselement oder der Schwenkhebel durch einen elektromotorisch betätigten Riegel in der Bewegung blockiert werden. Es ist natürlich ebenfalls vorstellbar, dass das Betätigungsübertragungsmittel mittels eines Stellelements, eines Riegels, einer Bremseinheit und/oder vergleichbarer Blockiermittel außer Funktion gesetzt wird.

Auch wenn hier lediglich eine geringe Anzahl von Mechanismen zur Blockierung der Bewegung des Betätigungsübertragungsmittels genannt sind, so können selbstverständlich auch andere Mechanismen eingesetzt werden, die ein Bewegen des Betätigungsübertragungsmittels verhindern bzw. blockieren. Darüber hinaus kann alternativ auch das Schloss selbst blockiert werden. Dies kann beispielsweise dadurch erfolgen, dass ein Auslösehebel zum Auslösen einer auf die Drehfalle wirkenden Sperrklinke in seiner Bewegung blockiert wird. Bevorzugt sind die Blockiermechanismen elektrisch betätigt, dies ist besonders vorteilhaft, da eine elektrische Stromversorgung im Kraftfahrzeug zur Verfügung steht.

In einer weiteren Ausführungsform der Erfindung ist mittels des Mittels zum außer Funktion setzen das Betätigungsmittel außer Eingriff bringbar. Als Betätigungsmittel ist hier wiederum das Betätigungselement, das Betätigungsübertragungsmittel und/oder das Schloss umfasst. Ein außer Eingriff bringen bewirkt hierbei, dass bei zum Beispiel einem Betätigen des Betätigungselements ein an das Betätigungselement anmontierter Bowdenzug außer Eingriff gebracht wird, so dass das Betätigungselement, wie beispielsweise ein Schwenkhebel, zwar eine Schwenkbewegung vollzieht, es aber keinen Eingriff in das Betätigungsübertragungsmittel gibt, so dass die Schwenkbewegung keinen Öffnungsvorgang initiiert. Das außer Eingriff bringen in der Betätigungskette kann gemäß den Beschreibungen einer Schlossfunktion auch als Verriegeln bezeichnet werden. Bei einem Verriegeln eines Schlosses wird zumeist auch eine Betätigungskette unterbrochen. Wird folglich das Betätigungselement außer Eingriff mit einem Betätigungsübertragungsmittel gebracht, so liegt die Betätigungseinrichtung in einem verriegelten Zustand vor.

Genau so kann auch das Betätigungsübertragungsmittel verriegelt werden, nämlich dann, wenn zum Beispiel in einem zum Beispiel als separates Modul ausgeführten Verriegelungselement das Betätigungsübertragungsmittel entkuppelbar ist. In diesem Fall wäre zum Beispiel ein Bowdenzug zwischen dem Betätigungselement und dem Kupplungsmodul und ein weiterer Bowdenzug zwischen dem Kupplungsmodul und dem Schloss angeordnet. Wird nun zum Beispiel mittels eines elektrischen Antriebs das Kupplungselement im Kuppiungsmodul ausgekuppelt, so liegt keine durchgängige Betätigungskette zwischen dem Betätigungselement und dem Schloss vor. Die Kupplung ist entkuppelt, wobei mittels des Kupplungsmoduls die Betätigungseinrichtung verriegelt wäre. Genauso könnte auch ein Entkuppeln im Schloss selbst erfolgen, wobei zum Beispiel ein Bowdenzug vom Schloss entkoppelt wird. Auch in diesem Fall würde bei einer Betätigung des Betätigungselements zwar das Betätigungsübertragungsmittel betätigt, dies würde aber nicht zu einem Entsperren des Schlosses und somit einer Überführung von einer Schließlage in eine Stützlage führen oder gegebenenfalls von einer Stützlage in eine Freigabelage führen, da das Betätigungsübertragungsmittel vom Schloss entkoppelt wäre. Ein Betätigen des Betätigungselements bliebe somit in Bezug auf die Betätigungseinrichtung wirkungslos.

Eine weitere vorteilhafte Ausgestaltungsform der Erfindung ergibt sich dann, wenn das Mittel zum außer Funktion setzen elektrisch betätigt ist. Wie bereits vorstehend ausgeführt, steht elektrische Energie im Kraftfahrzeug zur Verfügung, was eine kostengünstige Integration eines Mittels zum außer Funktion setzen ermöglicht. Elektrische Antriebe, die zum Beispiel als Kleinstantriebe ausgeführt sein können, können kostengünstig und kleinstbauend zur Verfügung gestellt werden und zum Beispiel ein Kupplungsmodul kostengünstig, kleinstbauend und in konstruktiv einfacher Weise betätigen. Ein elektrischer Antrieb kann somit in einfacher Weise die Betätigungseinrichtung blockieren und/oder entkuppeln und somit außer Funktion setzen.

Ist ein Schaltmittel vorgesehen, wobei mittels des Schaltmittels eine Stellung des Mittels zum außer Funktion setzen abfragbar ist, so ergibt sich eine weitere vorteilhafte Ausgestaltungsform der Erfindung. Ein Schaltmittel zur Überprüfung bzw. Detektion der Stellung des Mittels zur außer Funktion Setzung der Betätigungseinrichtung ermöglicht es hierbei, die Sicherheit weiter zu erhöhen. Insbesondere in dem Fall, in dem ein unbeabsichtigtes Öffnen der Schließeinrichtung bzw. des Schlosses unterbunden werden soll, kann es vorteilhaft sein, wenn die Funktionsstellung des Mittels zum außer Funktion setzen bekannt ist bzw. detektierbar ist, um ein Öffnen zu unterbinden oder zu verhindern. Dabei kann beispielsweise auch mittels des Schaltmittels ein Warnsignal steuerbar sein, mit dem der Bediener des Kraftfahrzeugs darauf hingewiesen wird, dass durch die Betätigung der Betätigungseinrichtung eine verkehrsgefährdende Situation hervorgerufen werden kann oder, dass dem Bediener angezeigt wird, dass diese Betätigungseinrichtung derzeit nicht zur Verfügung steht. In jedem Fall kann das Schaltmittel die Sicherheit der Betätigungseinrichtung erhöhen.

Mittels der in das Kraftfahrzeug integrierten Steuerung kann einerseits erfindungsgemäß die Geschwindigkeit des Kraftfahrzeugs erfasst werden, es kann aber auch gleichzeitig das der Betätigungseinrichtung zugeordnete Schaltmittel als Funktion der Stellung des Mittels zum außer Funktion setzen erfasst werden. Hierbei ergibt sich eine vorteilhafte Ausführungsform dahingehend, dass insbesondere im Rahmen einer vorgebbaren Grenzgeschwindigkeit des Kraftfahrzeugs ein Betätigen der Betätigungseinrichtung verkehrsgefährdend sein kann und somit als Funktion nicht mehr zur Verfügung stehen soll. Insbesondere in den Fällen, in denen ein rein mechanisches Öffnen des Schlosses, gemäß dem Stand der Technik möglich ist, bietet die Erfindung eine Verbesserung der Sicherheit, da ein außer Funktion setzen der Betätigungseinrichtung in Abhängigkeit einer Überschreitung beziehungsweise Unterschreitung einer Grenzgeschwindigkeit vorgebbar bzw. steuerbar ist. Es ist somit möglich, dass beispielsweise eine Grenzgeschwindigkeit von ≤5 km/h durch die Steuerung vorgebbar ist, und sobald die Steuerung eine Überschreitung der Geschwindigkeit des Kraftfahrzeugs von >5 km/h erfasst, die Steuerung die Betätigungsvorrichtung außer Funktion setzt. In dieser Funktionsweise würde die Steuerung die Betätigungseinrichtung zu jedem Zeitpunkt, zu dem das Kraftfahrzeug die Grenzwerte überschreitet, das Mittel zum außer Funktion setzen betätigen, was zu einer Vielzahl von Betätigungen der Mittel zum außer Funktion setzen führen würde.

Alternativ ist es vorstellbar und vorteilhaft, dass das Mittel zum außer Funktion setzen stets verriegelt vorliegt. Das heißt, die Betätigungseinrichtung wäre im Normalzustand nicht betätigbar und zum Beispiel blockiert oder entkuppelt und würde lediglich im Falle einer Betätigung zum Beispiel des Betätigungselements freigegeben oder eingekuppelt. Insbesondere in Bezug auf einen Einsatz der Betätigungseinrichtung in Bezug auf eine Frontklappe könnte hiermit eine geringe Anzahl von Bewegungen oder Funktionen der Mittel zum außer Funktion setzen erreicht werden.

Erfindungsgemäß sind dabei eine Vielzahl von Kombinationsmöglichkeiten vorstellbar und vorteilhaft. So könnte beispielsweise ein Betätigen des Betätigungselements dazu führen, dass das Mittel zum außer Funktion setzen aktiviert wird und beispielsweise eine Blockierung des Betätigungsübertragungsmittels aufgehoben wird. Ebenso ist es vorstellbar, dass bei einem Betätigen des Betätigungselementes ein Kupplungsmodul einkuppelt und somit die Betätigungseinrichtung erst in Funktion setzt. Dies bietet einerseits den Vorteil, dass eine geringstmögliche Anzahl von Bewegungen im Mittel zum außer Funktion setzen notwendig sind und andererseits zum Beispiel im Falle einer Bewegung des Kraftfahrzeugs oberhalb einer Grenzgeschwindigkeit die Betätigungseinrichtung für den Bediener erst gar nicht zur Verfügung steht.

Vorteilhaft kann es zum Beispiel auch sein, wenn mittels eines ersten Betätigens des Betätigungselementes eine verriegelte Betätigungseinrichtung entriegelt wird und erst bei einem nochmaligen Betätigen des Betätigungselementes die Betätigungseinrichtung die Fronthaube zum Beispiel aus einer Schließlage in eine Stützlage überführt. Bei einem nochmaligen Betätigen des Betätigungselementes könnte dann die Frontklappe in eine Freigabelage gelangen. Dies bietet ein Höchstmaß an Sicherheit, da bei jedem Betätigen des Betätigungselementes stets mittels der Steuerung einerseits die Funktionsstellung des Mittels zum außer Funktion setzen abfragbar ist und darüber hinaus die Möglichkeit besteht, über die Steuerung abzufragen, ob das Kraftfahrzeug sich oberhalb oder unterhalb einer Grenzgeschwindigkeit bewegt.

In einem weiteren Ausführungsbeispiel kann das Mittel zum außer Funktion setzen immer entsperrt beziehungsweise eingekuppelt vorliegen. Nach einem ersten Betätigen des Betätigungselements gelangt die Frontklappe dann in eine Stützlage. Gleichzeitig wird mittels der Steuerung das Überschreiten oder Unterschreiten der definierten Grenzgeschwindigkeit abgefragt beziehungsweise ermittelt. Je nach Überschreitung oder Unterschreitung ist dann im zweiten Hub ein Überführen der Frontklappe in eine Freigabelage möglich oder es wird die Überführung der Frontklappe in die Freigabelage verhindert. Verhindern bedeutet, dass das Mittel zum außer Funktion setzen zum Beispiel vor dem zweiten Betätigen ausgekuppelt wird.

In vorteilhafter Weise kann das Mittel zum außer Funktion setzen im Dauerbetrieb entsperrt beziehungsweise eingekuppelt vorliegen. Kommt es nun zu einem Stromausfall oder Stromabfall im Kraftfahrzeug, so ist liegt das Mittel zum außer Funktion setzen funktionsbereit vor. Mit anderen Worten der Bediener ist in der Lage die Motorhaube beziehungsweise Frontklappe manuell und ohne externe Stromquelle zu öffnen.

Sind mindestens zwei Schlösser vorgesehen und umfasst das Betätigungsübertragungsmittel eine Weiche, wobei das Mittel zum außer Funktion setzen unmittelbar auf die Weiche wirkt, so ergibt sich eine weitere vorteilhafte Ausgestaltungsform der Erfindung. Ist das Betätigungsübertragungsmittel beispielsweise ein Bowdenzug, wobei mittels des Bowdenzugs zwei Schlösser betätigt werden, so kann im Bereich einer Weiche ein Mittel zum außer Funktion setzen des Betätigungsübertragungsmittels eingesetzt werden. Dies bietet dahingehend einen Vorteil, da die Weiche bereits als separates Bauteil vorliegt und zum Beispiel eine Führung für die Enden der Bowdenzüge umfasst. Die in der Weiche vorliegende Führung kann dabei dazu genutzt werden, um beispielsweise mittels eines elektrischen Antriebs und/oder eines Riegels und/oder einer Hebekette ein Blockieren der Führung zu ermöglichen und/oder ein Entkuppeln der Bowdenzüge zu ermöglichen. Entkuppeln bedeutet hierbei, dass ein erster Bowdenzugteil zwischen dem Betätigungselement und der Weiche von den beiden Bowdenzügen zu den jeweiligen Schlössern entkuppelt wird. Da die Weiche bereits vorliegt, kann zum Beispiel ein Kleinstantrieb als elektrischer Antrieb mit einem Blockiermechanismus leicht an die Weiche montiert werden. Wird dann beispielsweise an einen Riegel des Blockiermechanismus unmittelbar ein Schaltmittel angeordnet, so kann unmittelbar auf den Zustand des Riegels und somit des Mittels zum außer Funktion setzen geschlossen werden. Es ist somit eine kostengünstige und konstruktiv einfache Lösung zur Erhöhung der Sicherheit einer Betätigungseinrichtung gegeben.

Die Erfindung schlägt gemäß einem zweiten Aspekt ein Verfahren zum Steuern einer Betätigungseinrichtung mit mindestens einem Schloss, insbesondere einem Schloss für eine Frontklappe eines Kraftfahrzeugs vor, bei dem
- mittels eines ersten Betätigens eines Betätigungselements die Frontklappe von einer Schließlage in eine Stützlage überführt wird;
- mittels eines weiteren Betätigens des Betätigungselementes die Frontklappe von der Stützlage in eine Freigabelage überführt wird;
- das Betätigen mittels eines zwischen dem Schloss und dem Betätigungselement angeordneten Betätigungsübertragungsmittels durchgeführt wird;
- die Betätigungseinrichtung mittels eines Mittels zum außer Funktion setzen außer Funktion gesetzt wird;
- eine Geschwindigkeit des Kraftfahrzeugs erfasst wird;
- das Mittel zum außer Funktion setzen in Abhängigkeit von der Geschwindigkeit gesteuert wird.

Durch die erfindungsgemäße Ausbildung des Verfahrens wird insbesondere bei einem mehrstufigen Öffnen eines Schlosses zum Öffnen einer Frontklappe eine weitere Sicherheitsfunktion integriert. Insbesondere das außer Kraft setzen der Betätigungseinrichtung bietet dabei die Möglichkeit, dass einem Bediener visuell und/oder akustisch und/oder haptisch eine Rückmeldung gegeben wird, um anzuzeigen, dass eine sicherheitsrelevante Funktion betätigt wird. Somit kann unmittelbar eine Verkehrsgefährdung verhindert werden und gleichzeitig dem Bediener angezeigt werden, dass diese Funktion nicht zur Verfügung steht. In beiden Fällen wird verhindert, dass die Frontklappe unbeabsichtigt geöffnet wird.

Nachfolgend wird die Erfindung unter Bezugnahme auf die anliegenden Zeichnungen anhand eines bevorzugten Ausführungsbeispiels und anhand einer Prinzipskizze näher erläutert. Es gilt jedoch der Grundsatz, dass das Ausführungsbeispiel die Erfindung nicht beschränkt, sondern lediglich vorteilhafte Ausgestaltungsformen darstellen. Die dargestellten Merkmale können einzeln oder in Kombination mit weiteren Merkmalen der Beschreibung wie auch den Patentansprüchen einzeln oder in Kombination ausgeführt werden.

Es zeigt:
- FIG. 1: eine Draufsicht auf einen Teil eines Kraftfahrzeugs mit einer prinzipiellen Darstellung einer Anordnung einer Betätigungseinrichtung,
- FIG. 2: ein Ausführungsbeispiel einer Betätigungseinrichtung im Falle eines Einsatzes mit einer Weiche und zwei Schlössern, und
- FIG. 3: eine vergrößerte Darstellung eines Teils der Betätigungseinrichtung gemäß der FIG. 2.

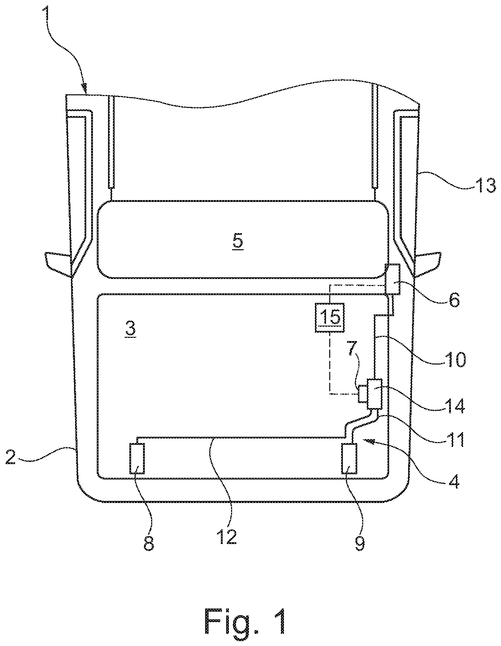

In der FIG. 1 ist eine Ansicht auf ein Kraftfahrzeug 1 in einer Draufsicht wiedergegeben. Dargestellt ist ein Frontbereich 2, in dem eine Frontklappe 3 des Kraftfahrzeugs 1 schwenkbeweglich angeordnet ist. Das Kraftfahrzeug 1 umfasst eine Betätigungseinrichtung 4, die von einem Inneren 5 des Kraftfahrzeugs 1 aus betätigbar ist. Die Betätigungseinrichtung 4 umfasst ein Betätigungselement 6, ein Mittel zum außer Funktion setzen 7, jeweils ein Schloss 8, 9 an den gegenüberliegenden Seiten des Kraftfahrzeugs 1 und ein Betätigungsübertragungsmittel, das einen ersten Bowdenzug 10 zwischen dem Betätigungselement 6 und dem Mittel zum außer Funktion setzen 7, einem zweiten Bowdenzug 11 zwischen dem Mittel zum außer Funktion setzen 7 und dem ersten Schloss 9 und einen dritten Bowdenzug 12 zwischen dem Mittel zum außer Funktion setzen 7 und dem zweiten Schloss 8 umfasst.

Das Betätigungselement 6 kann beispielsweise als Schwenkhebel ausgeführt sein, der von einem Inneren 5 des Kraftfahrzeugs 1 aus betätigbar ist. Mittels des Betätigungselements 6 wird der erste Bowdenzug 10 betätigt, so dass beispielsweise eine Zugkraft auf das Mittel zum außer Funktion setzen 7 übertragbar ist. Das Mittel zum außer Funktion setzen 7 ist in diesem Ausführungsbeispiel auf einer Fahrerseite 13 des Kraftfahrzeugs 1 angeordnet. Das Betätigungsübertragungsmittel weist dabei eine Weiche 14 auf, so dass eine zum Beispiel Zugbewegung des ersten Bowdenzugs 10 gleichmäßig auf die Bowdenzüge 11, 12 der Schlösser 8, 9 übertragbar ist. Durch ein Betätigen des Betätigungselements 6 ist somit ein Öffnen eines Gesperres der Schlösser 8, 9 entsperrbar.

Durch das Entsperren der Schlösser 8, 9 kann die Frontklappe 3 von einer Schließlage in eine Stützlage überführt werden. Nach einem nochmaligen Betätigen des Betätigungselements 6 folgt dann die Freigabe der Frontklappe 3, wobei beispielsweise ein Fanghaken aus dem Eingriffsbereich der Frontklappe 3 entfernt wird, so dass die Frontklappe 3 von einer Stützlage in eine Freigabelage überführbar ist. Mittels des Mittels zum außer Funktion setzen 7 kann die Betätigungseinrichtung 4 außer Funktion gesetzt werden. Dazu kann das Mittel zum außer Funktion setzen 7 die Bewegung zum Beispiel eines Schiebers in der Weiche 14 blockieren.

Vorzugsweise würde das Mittel zum außer Funktion setzen 7 den Schieber in der Weiche 14 in einer Ausgangs- oder Normalstellung blockieren. Eine Steuerung 15 des Kraftfahrzeugs 1 könnte dann beispielsweise ein Betätigen des Betätigungselementes 6 erfassen und die Blockierung der Weiche 14 aufheben. Die elektrische Verbindung zwischen dem Betätigungselement 6 und dem Mittel zum außer Funktion setzen 7 sind in der FIG. 1 als gestrichelte Linien wiedergegeben. Eine Betätigung des Betätigungselements 6 wäre folglich durch die Steuerung 15 detektierbar, wodurch die Steuerung 15 ein Signal an das Mittel zum außer Funktion setzen 7 übertragen könnte, so dass eine blockierte Weiche 14 oder eine entkuppelte Weiche 14 entweder eingekuppelt oder die Blockierung aufgehoben werden könnte.

Auch wenn in diesem Ausführungsbeispiel das Mittel zum außer Funktion setzen 7 in der Weiche 14 angeordnet ist, so sind erfindungsgemäß natürlich auch beliebige andere Konstellationen der Anordnung insbesondere der Detektionsmittel einer Betätigung der Betätigungseinrichtung 4 wie auch der Mittel zum außer Funktion setzen 7 an anderen Bauteilen der Betätigungseinrichtung 4 gemäß der verschiedenen Ausführungsformen vorstellbar.

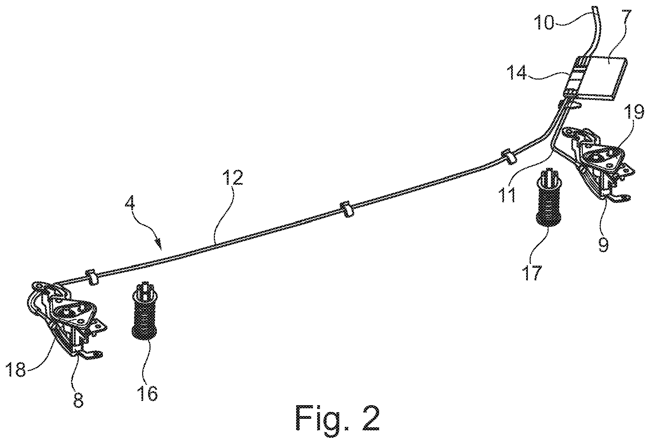

In der FIG. 2 ist ein Teil der Betätigungseinrichtung 4 aus der FIG. 1 als ein Ausführungsbeispiel wiedergegeben. Dargestellt ist der erste Bowdenzug 10 sowie die Bowdenzüge 11, 12, die ausgehend von der Weiche 14 jeweils mit den Schlössern 8, 9 verbunden sind. Neben den Schlössern 8, 9 sind Aufsteller 16, 17 angeordnet, die ein Anheben der Frontklappe 3 nach einem Entsperren bzw. Freigeben der Frontklappe 3 ermöglichen. Die Aufsteller 16, 17 wirken mittels Druckfedern und sind bekannt. Die Schlösser 8, 9 wirken jeweils mit an der Frontklappe 3 befestigten Schlosshaltern 18, 19 zusammen.

Das Mittel zum außer Funktion setzen 7 ist an der Weiche 14 angeordnet und kann zum Beispiel einen in der Weiche 14 angeordneten Schieber entkuppeln und somit einen verriegelten Zustand der Betätigungseinrichtung 4 ermöglichen. In vorteilhafter Weise bildet eine verriegelte Betätigungseinrichtung 4 ein Höchstmaß an Sicherheit, da ein Betätigen der Betätigungseinrichtung 4 zum Beispiel im Falle einer Überschreitung einer Grenzgeschwindigkeit des Kraftfahrzeugs 1 die Weiche 14 nicht einkuppeln würde, so dass ein Betätigen des Betätigungselements 6 wirkungslos bliebe. Der Bediener könnte zwar das Betätigungselement 6 betätigen, da die Weiche 14 aber entkuppelt vorliegt, wird die mittels des Betätigungselements 6 in den Bowdenzug 10 eingeleitete Kraft nicht auf die Bowdenzüge 11, 12 der Schlösser 8, 9 übertragen. Somit bleibt eine Gefährdung durch ein Öffnen der Frontklappe 3 durch einen Bediener während einer Fahrt des Kraftfahrzeugs 1 wirkungslos.

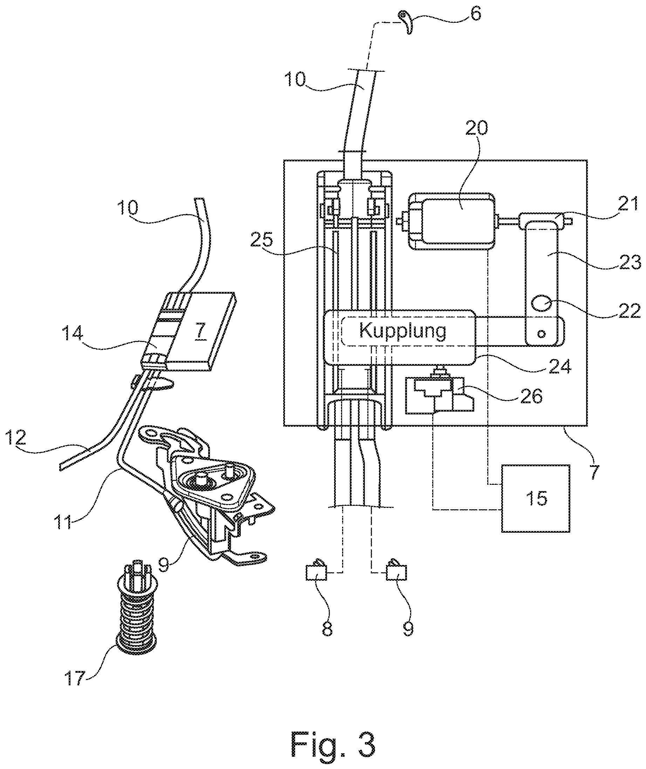

In der FIG. 3 ist eine vergrößerte Darstellung des Mittels zum außer Funktion setzen 7 in einem Ausführungsbeispiel wiedergegeben. Das Mittel 7 umfasst einen Elektromotor 20, eine an dem Elektromotor 20 angebrachte Verzahnung 21, einen um eine Achse 22 schwenkbar gelagerten Hebel 23, der mit einem Kupplungsglied 24 zusammenwirkt. Das Kupplungsglied 24 wirkt dabei auf einen Schieber 25, der einen Teil der Weiche 14 bildet. Ein Schaltmittel 26, hier in Form eines Mikroschalters, kann dabei die Stellung des Mittels zum außer Funktion setzen 7 und insbesondere des Kupplungsglieds 24 erfassen. Selbstverständlich könnte das Kupplungsglied 24 auch ein Mittel zum Blockieren darstellen, so dass ein Betätigen des Betätigungselements 6, in diesem Ausführungsbeispiel als Schwenkhebel 6 dargestellt, blockieren bzw. außer Eingriff bringen könnte.

Wie mit den gestrichelten Linien zwischen der Steuerung 15, dem Schaltmittel 26 und dem Elektromotor 20 angedeutet, kann mittels der Steuerung die Stellung des Mittels zum außer Funktion setzen 7 erfasst werden und je nach Stellung, Geschwindigkeit und Bewegung des Betätigungselements 6 die Blockade aufgehoben oder beibehalten werden. Selbstverständlich kann die Steuerung 15 auch mit weiteren Schaltmitteln im Schloss 8, 9 oder dem Betätigungselement 6 in Verbindung stehen, und eine entsprechende Auswertung in Bezug zum Beispiel auf eine Grenzgeschwindigkeit vornehmen, und somit ein Öffnen der Frontklappe 3 verhindern. Es ist somit ein Höchstmaß an Sicherheit für den Fahrzeugbediener bereitstellbar.

### BEZUGSZEICHENLISTE

- 1: Kraftfahrzeug
- 2: Frontbereich
- 3: Frontklappe
- 4: Betätigungseinrichtung
- 5: Innere des Kraftfahrzeugs
- 6: Betätigungselement, Schwenkhebel
- 7: Mittel zum außer Funktion setzen
- 8,9: Schlösser
- 10,11,12: Bowdenzug
- 13: Fahrerseite
- 14: Weiche
- 15: Steuerung
- 16,17: Aufsteller
- 18, 19: Schlosshalter
- 20: Elektromotor
- 21: Verzahnung
- 22: Achse
- 23: Hebel
- 24: Kupplungsglied
- 25: Schieber
- 26: Schaltmittel

## Patentansprüche

1. Betätigungseinrichtung (4) mit
• mindestens einem Schloss (8, 9), umfassend eine Drehfalle, wobei die Drehfalle mittels eines Schlosshalters (18, 19) in eine Schließlage verbringbar ist;
• einem mit dem Schloss (8, 9) verbundenen Betätigungselement (6), wobei nach einem ersten Betätigen des Betätigungselements (6) die Frontklappe (3) von einer Schließlage in eine Stützlage verbringbar ist und wobei nach mindestens einem weiteren Betätien des Betätigungselements (6) die Frontklappe (3) in eine Freigabelage verbringbar ist;
• einem Betätigungsübertragungsmittel (10, 11, 12), zwischen dem Betätigungselement (6) und dem Schloss (8, 9);
**dadurch gekennzeichnet, dass**
• ein Mittel zum außer Funktion setzen (7) der Betätigungseinrichtung (4) vorgesehen ist, so dass ein Betätigen des Schlosses (8, 9) mittels des Betätigungselementes (6) unterbindbar ist;
• eine Steuerung (15) vorgesehen ist;
• mittels der Steuerung (15) eine Geschwindigkeit des Kraftfahrzeugs (1) erfassbar ist;
• das Mittel zum außer Funktion setzen (7) in Abhängigkeit von der Geschwindigkeit steuerbar ist.

2. Betätigungseinrichtung (4) nach Anspruch 1, **dadurch gekennzeichnet, dass** das Mittel zum außer Funktion setzen (7) unmittelbar auf das Betätigungsübertragungsmittel (10, 11, 12) wirkt.

3. Betätigungseinrichtung (4) nach einem der Ansprüche 1 oder 2, **dadurch gekennzeichnet, dass** das Mittel zum außer Funktion setzen (7) ein Bestandteil des Betätigungselements (6) und/oder des Schlosses (8, 9) ist.

4. Betätigungseinrichtung (4) nach einem der Ansprüche 1 bis 3, **dadurch gekennzeichnet, dass** mittels des Mittels zum außer Funktion setzen (7) das Betätigungsübertragungsmittel (10, 11, 12) blockierbar ist.

5. Betätigungseinrichtung (4) nach einem der Ansprüche 1 bis 4, **dadurch gekennzeichnet, dass** mittels des Mittels zum außer Funktion setzen (7) das Betätigungsmittel (6) außer Eingriff bringbar ist.

6. Betätigungseinrichtung (4) nach einem der Ansprüche 1 bis 5, **dadurch gekennzeichnet, dass** das Mittel zum außer Funktion setzen (7) elektrisch betätigbar ist.

7. Betätigungseinrichtung (4) nach einem der Ansprüche 1 bis 6, **dadurch gekennzeichnet, dass**
• ein Schaltmittel (26) vorgesehen ist,
• wobei mittels des Schaltmittels (26) eine Stellung des Mittels zum außer Funktion setzen (7) abfragbar ist.

8. Betätigungseinrichtung (4) nach einem der vorigen Ansprüche, **dadurch gekennzeichnet, dass**
• mindestens zwei Schlösser (8, 9) vorgesehen sind und
• das Betätigungsübertragungsmittel (10, 11, 12) eine Weiche (14) umfasst und
• das Mittel zum außer Funktion setzen (7) unmittelbar auf die Weiche (14) wirkt.

9. Verfahren zum Steuern einer Betätigungseinrichtung (4) mit mindestens einem Schloss (8, 9), bei dem
• mittels eines ersten Betätigens eines Betätigungselementes (6) die Frontklappe (3) von einer Schließlage in eine Stützlage überführt wird;
• mittels eines weiteren Betätigens des Betätigungselements (6) die Frontklappe (3) von der Stützlage in eine Freigabelage überführt wird;
• das Betätigen mittels eines zwischen dem Schloss (8, 9) und dem Betätigungselement (6) angeordneten Betätigungsübertragungsmittels (10, 11, 12) durchgeführt wird;
**dadurch gekennzeichnet, dass**
• die Betätigungseinrichtung (4) mittels eines Mittels zum außer Funktion setzen (7) außer Funktion gesetzt wird;
• eine Geschwindigkeit des Kraftfahrzeugs (1) erfasst wird;
• das Mittel zum außer Funktion setzen (7) in Abhängigkeit von der Geschwindigkeit gesteuert wird.

## Claims

1. Operating device (4) comprising
• at least one latch (8, 9) comprising a catch, the catch being movable into a closed position by means of a latch holder (18, 19);
• an operating element (6) connected to the latch (8, 9), the front flap (3) being movable from a closed position into a supporting position after a first operation of the operating element (6), and the front flap (3) being movable into a release position after at least one further operation of the operating element (6);
• an operation transmission means (10, 11, 12) between the operating element (6) and the latch (8, 9);
**characterized in that**
• a means (7) for disabling the operating device (4) is provided so that an operation of the latch (8, 9) by means of the operating element (6) can be prevented;
• a controller (15) is provided;
• a speed of the motor vehicle (1) can be detected by means of the controller (15);
• the disabling means (7) can be controlled on the basis of the speed.

2. Operating device (4) according to claim 1, **characterized in that** the disabling means (7) acts directly on the operation transmission means (10, 11, 12).

3. Operating device (4) according to either claim 1 or claim 2, **characterized in that** the disabling means (7) is a component of the operating element (6) and/or of the latch (8, 9).

4. Operating device (4) according to any of claims 1 to 3, **characterized in that** the operation transmission means (10, 11, 12) can be blocked by means of the disabling means (7).

5. Operating device (4) according to any of claims 1 to 4, **characterized in that** the operating means (6) can be disengaged by means of the disabling means (7).

6. Operating device (4) according to any of claims 1 to 5, **characterized in that** the disabling means (7) can be operated electrically.

7. Operating device (4) according to any of claims 1 to 6, **characterized in that**
• a switching means (26) is provided,
• it being possible to query a position of the disabling means (7) by means of the switching means (26).

8. Operating device (4) according to any of the preceding claims, **characterized in that**
• at least two latches (8, 9) are provided, and
• the operation transmission means (10, 11, 12) comprises a switch (14), and
• the disabling means (7) acts directly on the switch (14).

9. Method for controlling an operating device (4) comprising at least one latch (8, 9), in which
• the front flap (3) is transferred from a closed position to a supporting position by means of a first operation of an operating element (6);
• the front flap (3) is transferred from the supporting position into a release position by means of a further operation of the operating element (6);
• the operation is carried out by means of an operation transmission means (10, 11, 12) arranged between the latch (8, 9) and the operating element (6); **characterized in that**
• the operating device (4) is disabled by means of a disabling means (7);
• a speed of the motor vehicle (1) is detected;
• the disabling means (7) is controlled on the basis of the speed.

## Revendications

1. Dispositif d'actionnement (4) comportant
• au moins un verrou (8, 9) comprenant un pêne pivotant, le pêne pivotant pouvant être amené dans une position de fermeture au moyen d'une gâche de verrou (18, 19) ;
• un élément d'actionnement (6) relié au verrou (8, 9), le capot avant (3) pouvant être amené d'une position de fermeture à une position d'appui après un premier actionnement de l'élément d'actionnement (6), et le capot avant (3) pouvant être amené dans une position de libération après au moins un nouvel actionnement de l'élément d'actionnement (6) ;
• un moyen de transmission d'actionnement (10, 11, 12), entre l'élément d'actionnement (6) et le verrou (8, 9) ;
**caractérisé en ce**
• **qu'**un moyen de désactivation (7) du dispositif d'actionnement (4) est prévu, de manière à empêcher un actionnement du verrou (8, 9) au moyen de l'élément d'actionnement (6) ;
• **qu'**une commande (15) est prévue ;
• **qu'**une vitesse du véhicule automobile (1) peut être détectée au moyen de la commande (15) ;
• **que** le moyen de désactivation (7) peut être commandé en fonction de la vitesse.

2. Dispositif d'actionnement (4) selon la revendication 1, **caractérisé en ce que** le moyen de désactivation (7) agit directement sur le moyen de transmission d'actionnement (10, 11, 12).

3. Dispositif d'actionnement (4) selon l'une des revendications 1 ou 2, **caractérisé en ce que** le moyen de désactivation (7) fait partie de l'élément d'actionnement (6) et/ou du verrou (8, 9).

4. Dispositif d'actionnement (4) selon l'une des revendications 1 à 3, **caractérisé en ce que** le moyen de transmission d'actionnement (10, 11, 12) peut être bloqué au moyen du moyen de désactivation (7).

5. Dispositif d'actionnement (4) selon l'une des revendications 1 à 4, **caractérisé en ce que** le moyen d'actionnement (6) peut être débrayé au moyen du moyen de désactivation (7).

6. Dispositif d'actionnement (4) selon l'une des revendications 1 à 5, **caractérisé en ce que** le moyen de désactivation (7) peut être actionné électriquement.

7. Dispositif d'actionnement (4) selon l'une des revendications 1 à 6, **caractérisé en ce**
• **qu'**un moyen de commutation (26) est prévu,
• le moyen de commutation (26) permettant d'interroger une position du moyen de désactivation (7).

8. Dispositif d'actionnement (4) selon l'une des revendications précédentes, **caractérisé en ce**
• **qu'**au moins deux verrous (8, 9) sont prévus, et
• **que** le moyen de transmission d'actionnement (10, 11, 12) comprend un interrupteur (14), et
• **que** le moyen de désactivation (7) agit directement sur l'interrupteur (14).

9. Procédé de commande d'un dispositif d'actionnement (4) comportant au moins un verrou (8, 9), dans lequel
• le capot avant (3) est transféré d'une position de fermeture à une position d'appui au moyen d'un premier actionnement d'un élément d'actionnement (6) ;
• le capot avant (3) est transféré de la position d'appui à une position de libération au moyen d'un nouvel actionnement de l'élément d'actionnement (6) ;
• l'actionnement est réalisé au moyen d'un moyen de transmission d'actionnement (10, 11, 12) disposé entre le verrou (8, 9) et l'élément d'actionnement (6) ;
**caractérisé en ce**
• **que** le dispositif d'actionnement (4) est désactivé au moyen d'un moyen de désactivation (7) ;
• **qu'**une vitesse du véhicule automobile (1) est détectée ;
• **que** le moyen de désactivation (7) est commandé en fonction de la vitesse.
